# EUROPÄISCHE PATENTSCHRIFT

(11) **EP 3 576 579 B1**
(45) Veröffentlichungstag und Bekanntmachung des Hinweises auf die Patenterteilung: **24.02.2021**
(21) Anmeldenummer: 18704392.2
(22) Anmeldetag: 24.01.2018
(51) Int. Cl.: A47D 13/02, A45F 5/00, A45F 5/02, B60N 2/28, A45F 3/14

(54) **TRAGEVORRICHTUNG FÜR KUNSTSTOFFHARTSCHALEN**
SUPPORT DEVICE FOR HARD PLASTIC SHELLS
DISPOSITIF DE PORTAGE POUR COQUES EN MATIÈRE PLASTIQUE

(30) Priorität: 02.02.2017 DE 102017102047
(43) Veröffentlichungstag der Anmeldung: 11.12.2019
(73) Patentinhaber: Rademacher, Britta, 45529 Hattingen (DE)
(72) Erfinder: Rademacher, Britta, 45529 Hattingen (DE)
(74) Vertreter: Willems, Volker
(86) Internationale Anmeldenummer: PCT/DE2018/100052
(87) Internationale Veröffentlichungsnummer: WO 2018/141331

(56) Entgegenhaltungen:
- EP-A1- 1 714 590
- KR-A- 20100 106 717
- US-A1- 2010 019 552
- US-B1- 6 926 181
- US-B1- 7 814 866

## Beschreibung

### Technisches Gebiet

Die Erfindung betrifft eine Vorrichtung zum Tragen einer Kunststoffhartschale mit Tragebügel, wie eine Babyschale bzw. ein Kindersitz für Kleinkinder, bestehend aus
a) einem Hüftgürtel mit einem Befestigungsmittel, wobei der Hüftgürtel im Bereich um die Hüften eines Trägers angelegt wird und wobei die Kunststoffhartschale an dem Befestigungsmittel des Hüftgürtels zum Tragen der Last befestigbar ausgestaltet ist und
b) das Befestigungsmittel als Haken ausgestaltet ist und der Haken in die Kunststoffhartschale für den Transport einhakt, wodurch eine Ein-Punkt-Befestigung zwischen der Kunststoffhartschale und dem Hüftgürtel entsteht, über die alleine die Last der Kunststoffhartschale auf den Hüftgürtel übertragen wird.

### Beschreibung

Für den Transport mit einem Kraftfahrzeug werden Babys bzw. Kleinkinder zur passiven Sicherheit in Kunststoffhartschalen angeschnallt. Dabei handelt es sich bei den Kunststoffhartschalen regelmäßig um gepolsterte Halbschalen, in die die Babys in eine altersgerechte Position gelegt bzw. gesetzt werden. Die Hartschalen werden wiederum mit dem Gurtsystem des Kraftfahrzeugs auf den Sitzen befestigt. Diese Kunststoffhartschalen, auch als Autokindersitze bezeichnet, verfügen oft über einen bügelartigen Tragegriff für den Transport. Die Kunststoffhartschalen können so leicht aus dem Kraftfahrzeug herausgenommen werden. Das Kind selbst verbleibt dabei in der Kunststoffhartschale. In diesen Kunststoffhartschalen lassen sich die Babys schließlich mit Hilfe des Tragegriffs überall hin relativ geschützt tragen.

Obwohl Babys üblicherweise über kein großes Gewicht verfügen und die Kunststoffhartschalen in Leichtbauweise hergestellt sind, wird einem Träger dies schnell zu schwer. Außerdem ist immer eine Hand am Tragegriff, so dass der Träger nur eine Hand für sonstige Tätigkeiten zur Verfügung hat.

Es sind daher spezielle Tragevorrichtungen oder sonstige Transportvorrichtungen, insbesondere für solche Kunststoffhartschalen für Babys, bereits bekannt. Entweder werden Gurte bzw. Gurtsysteme zum Tragen verwendet oder auch ähnlich einem Kinderwagen Fahrgestelle unter den Kunststoffhartschalen zum Schieben befestigt.

### Stand der Technik

Unter der Bezeichnung "Cocobelt" ist ein Gurt bekannt, welcher um den bügelartigen Tragegriff eines Autokindersitzes und um die Schulter einer Person zum Tragen geführt wird.

Die DE 2020 1500 5485 U1 beschreibt eine Babytrage mit ergänzbarem, komprimierbarem Zusatz aus stabilisierenden Festteilen, der transformiert und in Kombination mit der Babytrage eine absetzbare, frei stehende Babywippe darstellt. Die Babytrage weist einen Sitzsack auf, der am oberen Kopfteil und am unteren Fußteil jeweils in einen faltbaren, verstärkten Abschnitt übergeht und an dem zwei Schulterträger und ein Hüftgurt für die tragende Person sowie ein Schultergurt für das Baby, der durch eine Stofflasche gezogen wird, angebracht sind.

Die DE 103 36 167 B3 betrifft einen Kindersitz, welcher mit korrespondierenden Halteeinrichtungen an einem Kinderwagengestell befestigt werden kann. Der Kindersitz kann auf diese Weise zum Transport geschoben werden.

Aus der DE 010 0005 95 A1 ist eine Trage- bzw. Haltevorrichtung für Lasten, insbesondere Kleinkinder und Gegenstände bekannt. Es werden ergonomische Tragevorrichtungen beschrieben, die die Haltekräfte über biegesteife Bügel auf die stärker druckbelastbaren Bereiche des Oberkörpers wie den Brustkorb und den Rücken übertragen, ohne auf den druckempfindlichen Hals- und Nackenmuskeln aufzuliegen. Die Lasten können direkt oder über Gestänge oder Bänder an dem biegesteifen Gestell und vor, neben oder hinter dem Körper der tragenden Person befestigt sein.

Die DE 20 2014 009 917 U1 beschreibt weiterhin eine Vorrichtung zum Halten und Tragen von Babys in Babyschalen, welche erlaubt, dass die Gewichtskraft einer Babyschale in Verbindung mit derjenigen eines darin befindlichen Babys, sowie die daraus resultierenden Kräfte symmetrisch auf den Körper der tragenden Person wirken und dass sie das Gewicht der Babyschale auf beide Schultern, Rücken und Hüfte einer tragenden Person verteilt.

In der US 5,267,680 und in der US 5,540,365 werden Trage- oder Autositzschalen für Kinder offenbart, welche mit einem Tragegurt über die Schulter getragen werden können. Die Tragegurte werden dazu an zwei bzw. drei geeigneten Punkten an den Autositzschalen befestigt. Der Tragegurt wird dann über die Schulter zum Tragen des Kindersitzes gelegt.

Aus der US 2003/0106916 ist eine Vorrichtung zum Tragen von Autokindersitzen bekannt. Die Vorrichtung wird wie ein Rucksack mit Tragegurten getragen. Dabei sitzt das Kind in der Autositzschale auf dem Rücken des Trägers. Tragegurte sind dabei über die Schultern geführt. Um die Hüfte ist ein stabilisierender Gurt vorgesehen.

Die EP 1714 590 A1 beschreibt eine Vorrichtung zum Halten von Babys in Babyschalen. Die Babyschale wird an einem Hüftgurt befestigt und mit Schultergurten, welche ebenfalls an der Babyschale befestigt sind, ausbalanciert- Diese Vorrichtung hat den Nachteil, dass sie umständlich anzulegen ist. Bei dicken Jacken des Trägers können die Schultergurte sehr störend sein. Ferner belastet die Vorrichtung zum Halten von Babys in Babyschalen die Wirbelsäule, da die Kräfte der übertragenden Last auch auf die Schultern, also oberhalb der Hüften auf den Träger wirken.

Auch die DE 10 2006 059 890 A1 offenbart eine Tragehilfe zum Transport von Personen, insbesondere von Säuglingen oder Kleinkindern, mit einem im Bereich der Oberkörperkontur einer Tragperson anzuordnenden, insbesondere ein Gestell oder einen oder mehrere Gurte aufweisenden Trageteil, welches einen im Hüftbereich der Tragperson befindliches, gürtelartiges Halteteil trägt. An dem Halteteil ist wenigstens ein an diesem bewegliches, von der Kontur der Tragperson wegweisendes Stützorgan angeordnet. An dem Halteteil abgewandten Endbereich des Stützorgans ist mindestens eine Aufnahmeeinrichtung zur Unterbringung eines zu transportierenden Körpers vorgesehen. Durch die Anordnung eines Stützorgans zwischen Trageteil und Halteteil lässt sich eine definierte Lasteinleitung der zu transportierenden Last am Körper der Tragperson an denjenigen Stellen erreichen, an welchen das Stützorgan mit dem Halteteil verbunden ist.

Die DE 20 2005 017 186 U1 betrifft eine Hüfttragevorrichtung, bei der ein starres Material derart passgenau um die Hüfte gelegt wird, dass mit seiner Hilfe das Tragen von Lasten verschiedenster Art ohne Inanspruchnahme des Rückens und der Schultern ermöglicht wird. Als Vorrichtungen zur Befestigung des oder der zu tragenden Objekte können sämtliche Arten starrer Verbindungen, beispielsweise Haken, Hülsen oder Verschlüsse, dienen. Weiterhin kann eine Ablagefläche direkt an die Tragevorrichtung angebracht werden.

Die US 6,926,181 B1 offenbart ein Gurtsystem, welches aus zwei fest miteinander verbundenen Schlaufen besteht. Die eine Schlaufe wird dabei um die Hüfte eines Trägers geschnallt und die andere Schlaufe um eine Babytrageschale. Das Befestigen und Lösen dieses Tragesystems ist relativ umständlich, weil zwei Schlaufen umgebunden und eingestellt werden müssen.

Die KR 2010 0106717 beschreibt ein Gurtsystem, welches sich alleine auf der Taille eines Trägers abstützt. Das Gurtsystem dient dazu Babys bzw. Kinder vor dem Körper zu tragen.

Aus der US 7,814,866 B1 ist ein Gürtel mit einem Karabinerhaken bekannt. An den Karabinerhaken kann eine Hundeleine befestigt werden, um einen Hund auszuführen.

Aus der US 2010/0019552 A1 ist ein Clip bekannt, der an einen Gürtel geklemmt werden kann. Der Clip weist einen Haken auf, der zum Transport von Kindertransportschalen mit einem darin befindlichen Kind eingehakt wird. Beim Gehen des Trägers kann durch die Auf- und Ab-Bewegung die Schale sich vom Haken lösen. Das kann für das Kind in der Kindertransportschale unter Umständen verheerende Folgen haben.

Die bekannten Tragegurte bzw. Tragevorrichtungen haben den Nachteil, dass sie die Wirbelsäule des jeweiligen Trägers extrem belasten. Die Gurte, die nur über eine Schulter gelegt werden, erzeugen auch noch eine Asymmetrie beim Tragen, was eine zusätzliche Schiefstellung bedeutet. Viele bekannte Tragegurte bzw. Tragevorrichtungen haben ferner den Nachteil, dass mindestens eine Hand zum Sichern der Tragekonstruktion mit einer solchen Kunststoffhartschale erforderlich ist.

### Offenbarung der Erfindung

Aufgabe der Erfindung Ist es daher, eine Vorrichtung zu schaffen, die die Nachteile des Standes der Technik vermeidet und insbesondere die Wirbelsäule beim Tragen der Kunststoffhartschale nicht belastet. Außerdem soll die transportierte Last einfach und sicher befestigbar sein.

Erfindungsgemäß wird die Aufgabe dadurch gelöst, dass bei einer Vorrichtung zum Tragen einer Kunststoffhartschale der eingangs genannten Art
a) eine zusätzliche lösbare Sicherungsverbindung zwischen den Befestigungsmitteln und der Kunststoffhartschale vorgesehen ist, welche das selbständige Lösen der Verbindung zwischen dem Haken und der Kunststoffhartschale verhindert.

Die Erfindung beruht auf dem Prinzip, die Wirbelsäule nach Möglichkeit vollständig zu entlasten. Daher ist der Tragegurt nur als Hüftgürtel ausgestaltet, der sich nicht auf die Wirbelsäule abstützt. Der Hüftgürtel wird dabei um die Hüfte geschnallt. Die Kräfte, die nun auf den Hüftgürtel wirken, übertragen sich nur auf die Hüft- und Beinmuskulatur des Trägers. Die Kräfte wirken also nur unterhalb der Wirbelsäule und belasten diese nun nicht mehr. Der Hüftgürtel stützt sich auf den Hüften des Trägers ab. Die Kunststoffhartschale wird dazu mit dem Befestigungsmittel an dem Hüftgürtel nach Möglichkeit lösbar befestigt. Mit der starken Beinmuskulatur kann diese Kunststoffhartschale samt Inhalt relativ leicht getragen werden. Orthopädische ungesunde Schieflagen und Belastungen der Wirbelsäule treten bei der vorliegenden Erfindung nicht mehr auf, weil die Wirbelsäule nun nicht mehr unmittelbar belastet wird. Durch die Ein-Punkt-Befestigung, die zwischen Kunststoffhartschale und Tragegurt besteht, ist die Kunststoffhartschale leicht anbringbar und auch bei Bedarf beweglich schwenkbar am Körper. Die eine zusätzliche lösbare Sicherungsverbindung zwischen den Befestigungsmitteln und der Kunststoffhartschale verhindert, dass die Ein-Punkt-Befestigung sich löst. Die Sicherungsverbindung ist vorzugsweise zwischen der Kunststoffhartschale und dem Haken vorgesehen. Denn auch ein Haken, bei dem man glaubt, dass er sicher eingehakt ist, kann sich unvorhergesehen lösen. Daher dient diese zusätzliche Sicherungsverbindung dazu, noch mehr Sicherheit zu gewährleisten, besonders dann, wenn Babys mit dieser Kunststoffhartschale getragen werden. Die Kunststoffhartschale wird schließlich über den Tragebügel ausbalanciert. Hierfür sind somit keine zusätzlichen Gurte oder dgl. erforderlich.

In einer vorteilhaften Ausgestaltung der Erfindung ist die Sicherungsverbindung als schwenkbarer Clip ausgebildet. Der schwenkbare Clip sichert die Verbindung zwischen dem Haken des Hüftgürtels und der Kunststoffhartschale. Hierdurch kann der Haken sich nicht mehr versehentlich von der Kunststoffhartschale lösen. Dieser schwenkbare Clip wird dazu beispielsweise in oder auf eine geeignete Sicherungshalterung der Kunststoffhartschale geschwenkt.

Eine vorteilhafte Ausgestaltung der erfindungsgemäßen Vorrichtung zum Tragen einer Kunststoffhartschale besteht darin, dass das Befestigungsmittel als Haken ausgestaltet ist, wobei der Haken in die Kunststoffhartschale für den Transport einhakt. Dieses mechanische Befestigungsmittel lässt sich relativ einfach herstellen. Der Haken ist besonders geeignet die Belastungen und Kräfte aufzunehmen, welche beim Tragen der Kunststoffhartschale entstehen, ohne sich zu verformen. Vorzugsweise wird hier ein entsprechendes Metall verwendet.

Als vorteilhafte Ausgestaltung der erfindungsgemäßen Vorrichtung zum Tragen einer Kunststoffhartschale hat sich erwiesen, wenn der Hüftgürtel in seiner Länge einstellbar ausgebildet ist. Der Hüftgürtel ist damit individuell für einen Träger anpassbar. Der Hüftgürtel kann durch die Möglichkeit der Längenverstellung beispielsweise auch über dickerer Kleidung getragen werden.

Eine bevorzugte Ausbildung der erfindungsgemäßen Vorrichtung zum Tragen einer Kunststoffhartschale ergibt sich auch dadurch, dass der Hüftgürtel einen Steckverschluss zum lösbaren Verbinden von Hüftgürtelenden aufweist. Der Steckverschluss ist eine sichere Verbindung für den Hüftgürtel, welcher sich zudem einfach zusammenfügen und lösen lässt.

Eine zweckmäßige Variante zum Steckverschluss bei der erfindungsgemäßen Vorrichtung besteht darin, dass der Hüftgürtel einen Klett-Verschluss zum lösbaren Verbinden von Hüftgürtelenden und/oder zum Einstellen der Hüftgürtellänge aufweist. Klett-Verschlüsse sind extrem belastbar. Hiermit lässt sich nicht nur der Hüftgürtel bequem verschließen, sondern auch die Länge variieren. Die Klett-Verbindungen können bei Bedarf auch mit den Steck-Schnappverschlüssen kombiniert werden.

Eine bevorzugte Ausbildung der erfindungsgemäßen Vorrichtung zum Tragen einer Kunststoffhartschale besteht ferner darin, dass der Haken aus einem U-förmigen Element besteht, dessen beide Enden an dem Hüftgürtel befestigt sind. Durch diese Form des Hakens ist eine Verletzung nicht so leicht möglich. Außerdem ermöglicht diese Form ein großflächiges Einhaken in die Kunststoffhartschale, ohne diese dabei zu beschädigen.

Eine weitere vorteilhafte Ausgestaltung der erfindungsgemäßen Vorrichtung zum Tragen einer Kunststoffhartschale besteht darin, dass der Haken als Karabinerhaken ausgebildet ist. Ein Karabinerhaken löst sich beispielsweise nicht selbstständig von einer Öse, an der er befestigt ist. Hierfür muss der Karabinerhaken gegen eine Federkraft geöffnet werden. Gegebenenfalls ist auch ein Verschluss vorgesehen, welcher erst entriegelt werden muss, um den Karabinerhaken zu öffnen. Im verschlossenen Zustand ist der Karabinerhaken entsprechend durch den Verschluss gesichert.

Es kann durchaus sein, dass der Hüftgürtel ohne Kunststoffhartschale getragen werden soll. Dabei ist der Haken bei Bewegungen relativ störend. Eine besondere Ausbildung der erfindungsgemäßen Vorrichtung zum Tragen einer Kunststoffhartschale besteht daher darin, dass der Haken lös- und/oder klappbar an dem Hüftgürtel ausgebildet ist. Auf diese Weise kann der Haken entweder vollständig entfernt werden oder platzsparend weggeklappt werden. Bei Bedarf wird der Haken entweder wieder befestigt oder ausgeklappt.

In einer besonders bevorzugten Ausgestaltung der erfindungsgemäßen Vorrichtung zum Tragen einer Kunststoffhartschale ist eine Polsterung für den Hüftgürtel im Bereich des Hakens ausgebildet. Durch das Tragen einer Kunststoffhartschale mittels der vorliegenden Erfindung kann es vorkommen, dass Druckstellen durch das Tragen des Hüftgürtels im Bereich der Hüfte entstehen. Vor allem der Haken ist besonders hart ausgebildet, beispielsweise aus Metall, und drückt bei Belastung gegen die Hüfte. Daher dämpft eine geeignete Polsterung den Druck und verhindert somit die Druckstellen.

Eine zweckmäßige Ausbildung der erfindungsgemäßen Vorrichtung zum Tragen einer Kunststoffhartschale ergibt sich dadurch, dass eine zusätzliche Sicherungsverbindung zwischen dem Haken und der Kunststoffhartschale vorgesehen ist, welche das selbständige Lösen des Hakens verhindert. Damit wird verhindert, dass die Kunststoffhartschale von dem Haken abrutschen kann. Beispielsweise kann zusätzlich eine Sicherungsleine von dem Hüftgürtel zur Kunststoffhartschale geführt werden. Sollte der Haken sich von der Kunststoffhartschale lösen, so wird der Halt noch durch die Sicherungsleine gewährleistet.

Der Körper und auch die Bewegungen von den Personen, welche eine Kunststoffhartschale mit der erfindungsgemäßen Vorrichtung tragen sollen, sind in der Regel sehr unterschiedlich ausgebildet. Jeder hat daher eine bevorzugte Stelle an der Hüfte, wo der Haken bequem sitzt. Eine zweckmäßige und bevorzugte Ausgestaltung der erfindungsgemäßen Vorrichtung zum Tragen einer Kunststoffhartschale ergibt sich deswegen dadurch, dass der Haken an dem Hüftgürtel verschiebbar ausgebildet ist. Diese Maßnahme ermöglicht es den Haken in eine zum Tragen bequeme Position zu verschieben.

Eine vorteilhafte Ausgestaltung der Erfindung besteht außerdem darin, dass die Kunststoffhartschale, wie eine Babyschale bzw. ein Kindersitz für Kleinkinder, ein Haltemittel an der Kunststoffhartschale für das Befestigungsmittel des Hüftgürtels aufweist. Diese Maßnahme ermöglicht das Befestigungsmittel des Hüftgürtels sicher an der Kunststoffhartschale zu fixieren. Diese Befestigungsmittel können vorteilhafter Weise beispielsweise als Rand, Ausnehmung, Haltestift und/oder Haltehaken bzw. Halteösen ausgebildet sein. Damit lässt sich der Haken des Hüftgürtels optimal an der Kunststoffhartschale befestigen.

Weitere Ausgestaltungen und Vorteile ergeben sich aus dem Gegenstand der Unteransprüche sowie den Zeichnungen mit den dazugehörigen Beschreibungen. Ausführungsbeispiele sind nachstehend unter Bezugnahme auf die beigefügten Zeichnungen näher erläutert. Die Erfindung soll nicht alleine auf diese aufgeführten Ausführungsbeispiele beschränkt werden. Sie dienen lediglich zur näheren Erläuterung der Erfindung.

### Kurze Beschreibung der Zeichnung

- Fig. 1: zeigt in einer perspektivischen Darstellung ein Ausführungsbeispiel für eine erfindungsgemäße Vorrichtung zum Tragen einer Kunststoffhartschale, die eine Person angelegt hat.
- Fig. 2: zeigt in einer perspektivischen Darstellung die erfindungsgemäße Vorrichtung zum Tragen einer Kunststoffhartschale entsprechend der Fig. 1.
- Fig. 3: zeigt einen Ausschnitt des Hüftgürtels mit einem Zurrgurthaken einer erfindungsgemäßen Vorrichtung gemäß den vorherigen Figuren.
- Fig. 4: zeigt in einer weiteren perspektivischen Darstellung einen Ausschnitt der erfindungsgemäßen Vorrichtung gemäß den vorherigen Figuren, bei der der Zurrgurthaken in die Kunststoffhartschale eingehakt ist.
- Fig. 5: zeigt einen Ausschnitt des Hüftgürtels mit einer Bandkonstruktion für den Zurrgurthaken gemäß den vorherigen Figuren.
- Fig. 6: zeigt in einer perspektivischen Darstellung die Innenseite des Hüftgürtels der erfindungsgemäßen Vorrichtung zum Tragen einer Kunststoffhartschale entsprechend den vorherigen Figuren.
- Fig. 7: zeigt den Zurrgurthaken für eine erfindungsgemäße Vorrichtung.
- Fig. 8: zeigt einen Zurrgurtdoppelhaken für eine erfindungsgemäße Vorrichtung.
- Fig. 9: zeigt einen Ausschnitt des Zurrgurtdoppelhakens für eine erfindungsgemäße Vorrichtung, welcher in eine Kunststoffhartschale eingreift.

### Bevorzugtes Ausführungsbeispiel

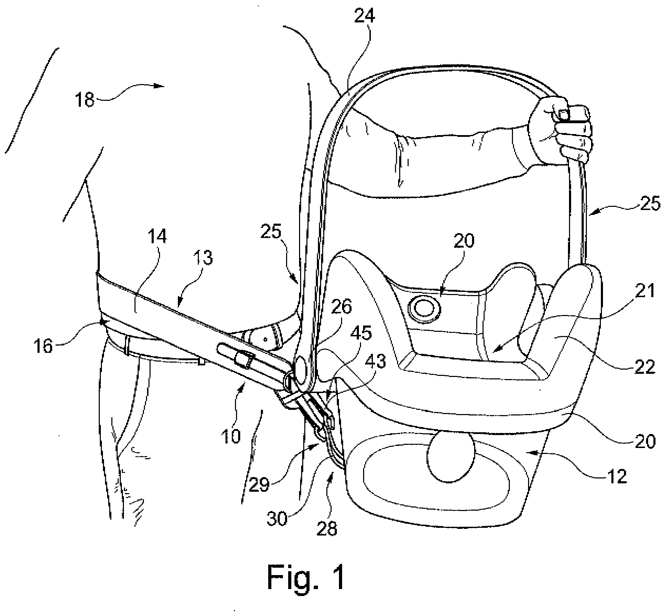

In Fig. 1 wird mit 10 eine erfindungsgemäße Vorrichtung zum Tragen einer Kunststoffhartschale 12 bezeichnet. Die Vorrichtung 10 umfasst einen Tragegurt 13. Der Tragegurt 13 ist im vorliegenden Ausführungsbeispiel als Hüftgürtel 14 ausgestaltet, welcher um eine Hüfte 16 einer Person 18 geschnallt ist. Die Person 18 ist in dieser Darstellung nur angedeutet. Die Kunststoffhartschale 12 ist als Babyschale 20 ausgebildet. Die Babyschale 20 ist quasi eine Halbschale 21, welche entsprechend mit einer körpergerechten Polsterung 22 ausgepolstert ist, so dass das Baby bzw. Kleinkind in diese Babyschale 20 gelegt bzw. gesetzt werden kann. Die Kunststoffhartschale 12 weist einen Tragebügel 24 auf, mit dem die Kunststoffhartschale 12 getragen werden kann. Der Tragebügel 24 ist mit seinen Enden 25 an der Kunststoffhartschale 12 befestigt. Die Befestigung des Tragebügels 24 an der Kunststoffhartschale 12 erfolgt über ein Gelenk 26. Durch das Gelenk 26 kann der Tragebügel 24 weggeklappt werden, sofern er zum Tragen, zum Stützen bzw. zum Ausbalancieren nicht benötigt wird. In dieser Darstellung umgreift Person 18 mit ihrer Hand den Tragebügel 24 und balanciert damit die Kunststoffhartschale 12 aus. Die Kunststoffhartschale 12 ist vorzugsweise für den Transport in Kraftfahrzeugen ausgestaltet und weist daher entsprechende Sicherheitsgurtsysteme auf. Diese Sicherheitsgurtsysteme sind in den vorliegenden Abbildungen aus Übersichtlichkeitsgründen nicht dargestellt.

An dem Hüftgürtel 14 ist ein Befestigungsmittel 28 für die Kunststoffhartschale 12 vorgesehen. Dabei handelt es sich um eine Ein-Punkt-Befestigung 29, weil alleine hierüber die Last der Kunststoffhartschale 12 auf den Hüftgürtel übertragen wird. Mit dem Befestigungsmittel 28 wird die Kunststoffhartschale 12 mit dem Hüftgürtel 14 verbunden. Das Befestigungsmittel 28 ist in diesem Ausführungsbeispiel als Zurrgurthaken 30 ausgestaltet. Bei dem Zurrgurthaken 30 handelt es sich um einen U-förmigen Haken 32, an dessen Enden 34 sich Ösen 36 befinden. Der Zurrgurthaken 30 ist aus einem Metalldraht 38 gefertigt. Der Zurrgurthaken 30 kann grundsätzlich auch aus einem Kunststoff oder einem Verbundmaterial hergestellt sein. Für den Zurrgurthaken 30 gilt, dass er aus möglichst leichtem Material besteht, um nicht ein zusätzliches Gewicht für den Träger zu bilden. Der Zurrgurthaken 30 muss nur ausreichende Stabilität aufweisen, um die Kunststoffhartschale 12 samt Inhalt zu tragen. Durch die Ösen 36 sind Schlaufen 40 von Bändern 42 geführt, mit welchen der Zurrgurthaken 30 an dem Hüftgürtel 14 verschiebbar befestigt ist. Die Bänder 42 können aus einem Kunststoff, Textilgewebe, Leder, Metall oder auch einem flexiblen Verbundgewebe hergestellt sein. Der Zurrgurthaken 30 greift in eine hier nicht sichtbare Halterung der Kunststoffhartschale 12 ein. Bei der Halterung kann es sich beispielsweise um eine Ausnehmung, einen Bolzen oder eine Schiene handeln.

Ein schwenkbarer Clip 43 ist an dem Hüftgürtel 14 vorgesehen. Der schwenkbare Clip 43 bildet eine Sicherungsverbindung 45, welche verhindert, dass das Befestigungsmittel 28 sich versehentlich selbständig von der Kunststoffhartschale 12 löst. Hierzu verriegelt der Clip 43 z.B. die Befestigungsmittel 28, wie den Zurrgurthaken 30 in der Halterung an der Kunststoffhartschale 12.

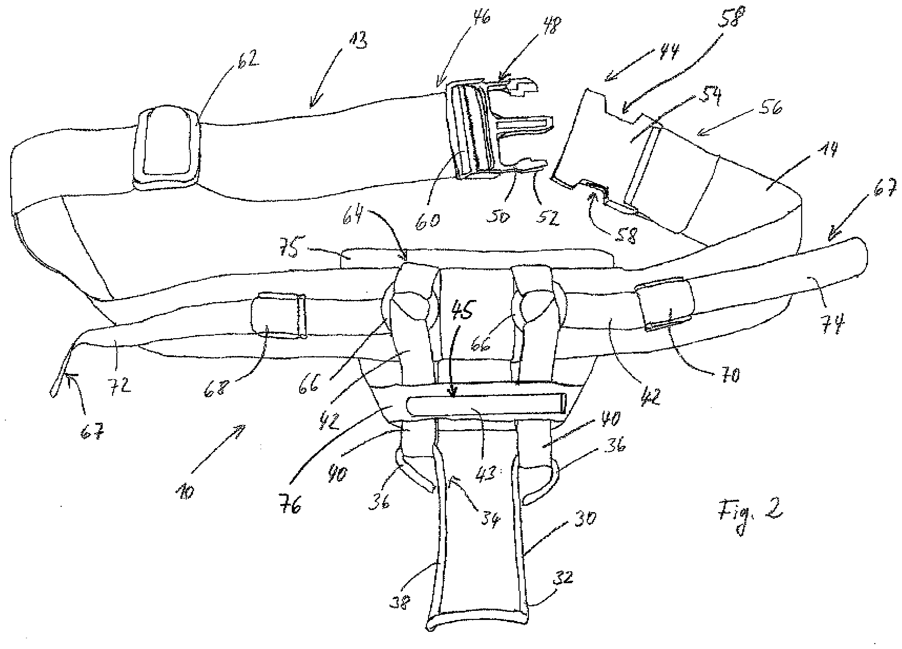

In Fig. 2 wird die erfindungsgemäße Vorrichtung 10 alleine in einer perspektivischen Darstellung gezeigt. Die Vorrichtung 10 beinhaltet den Hüftgürtel 14. Der Hüftgürtel 10 weist einen Steckverschluss 44 auf, mit dem sich der Hüftgürtel 14 öffnen und schließen lässt. Der Steckverschluss 44 weist an einem ersten Ende 46 des Hüftgürtels 14 ein auseinanderfederndes Klammerelement 48 mit Klammern 50 auf. An den Klammern 50 sind Rastnasen 52 vorgesehen. Dieses Klammerelement 48 wird in ein Aufnahmeelement 54 mit einer Rasterung für die Rastnasen 52 geschoben.

Das Aufnahmeelement 54 befindet sich an einem zweiten Ende 56 des Hüftgürtels 14. Sobald sich das Klammerelement 48 in einer Raststellung befindet spreizen sich Klammern 50 des Klammerelements 48 und rasten mit den Rastnasen 52 in dem Aufnahmeelement 54 ein. In dem Aufnahmeelement 54 sind Ausnehmungen 58 vorgesehen, welche dazu dienen, die eingerasteten und gespreizten Klammern 50 von außen manuell zusammenzudrücken und aus der Raststellung zu lösen. Der Steckverschluss 44 kann auf diese Weise wieder gelöst werden.

Das Klammerelement 48 weist eine Lasche 60 auf, durch die der Hüftgürtel 14 geführt ist. Mit einer Schieberschnalle 62 lässt sich die Länge des Hüftgürtels 14 verstellen. Die Schieberschnalle 62 ist dazu auf dem Hüftgürtel 14 verschiebbar vorgesehen. Der Hüftgürtel 14 verlängert oder verkürzt sich, je nachdem in welche Richtung die Schieberschnalle 62 entlang des Hüftgürtels 14 verschoben wird. Der Hüftgürtel 14 wird so an die tragende Person 18 angepasst. Der Zurrgurthaken 30 ist mit einer Bandkonstruktion 64 an dem Hüftgürtel 14 befestigt. Dabei werden die Schlaufen 40 der Bänder 42 durch die Ösen 36 des Zurrgurthakens 30 und um den Hüftgürtel 14 geführt. Die Bänder 42 werden durch Umlenkösen 66 geführt. Die Umlenkösen 66 sind jeweils an dem einen Ende 67 der Bänder 42 befestigt. An dem Hüftgürtel 14 sind jeweils seitlich zur Bandkonstruktion 64 Befestigungsschnallen 68, 70 vorgesehen. Die Bänder 42 werden mit ihren Enden 72, 74 an dem Hüftgürtel 14 verstellbar befestigt. Die Enden 72, 74 werden durch die Befestigungsschnallen 68, 70 geführt. Durch Lösen der Befestigungsschnallen 68, 70 kann das Band 42 nun verlängert oder verkürzt werden. Hierdurch lässt sich auch der Abstand des Zurrgurthakens 30 zum Hüftgürtel 14 variieren. Durch Feststellen der Befestigungsschnallen 68, 70 ist der Abstand des Zurrgurthakens 30 zum Hüftgürtel 14 fixiert.

An dem Hüftgürtel 14 ist ferner eine Hüftgurtpolsterung 75 befestigt. An der Hüftgurtpolsterung 75 befindet sich eine Bandschlaufe 76, durch welche das Band 42 geführt ist. Die Hüftgurtpolsterung 75 verhindert, dass es beim Tragen zu Druckbeschwerden durch den Hüftgürtel 14 oder den Zurrgurthaken 30 kommt.

Der Clip 43 ist wie bei Fig. 1 an dem Hüftgürtel 14 bzw. an der Bandschlaufe 76 schwenkbar vorgesehen. Der schwenkbare Clip 43 bildet die Sicherungsverbindung 45, welche verhindert, dass die Befestigungsmittel 28 sich versehentlich selbständig von der Kunststoffhartschale 12 lösen. Hierzu verriegelt der Clip 43 z.B. den Zurrgurthaken 30 an der Kunststoffhartschale 12. In vorliegender Darstellung ist der Clip 43 an die Bandschlaufe 76 geklappt.

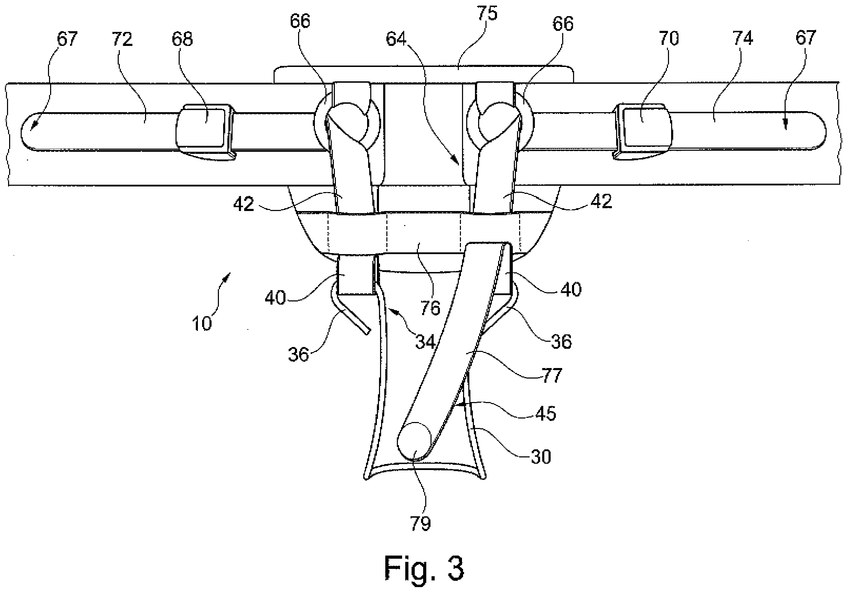

Die Fig. 3 zeigt einen vergrößerten Ausschnitt des Hüftgürtels 14 mit dem Zurrgurthaken 30. Soweit sich die Figuren entsprechen, wird hiermit auf die vorherigen Figuren Bezug genommen. Für identische Bestandteile werden auch die gleichen Bezugszeichen verwendet. An dem Hüftgürtel 14 sind jeweils seitlich zu der Bandkonstruktion 64 die Befestigungsschnallen 68, 70 angebracht. Die Befestigungsschnallen 68, 70 sind geschlossen, sodass der Zurrgurthaken 30 in seinem Abstand zum Hüftgürtel 14 fixiert ist. Durch die Bandkonstruktion 64 lassen sich die Bänder 42 mit den Befestigungsschnallen 68, 70 wahlweise verlängern oder verkürzen. Durch das Verlängern oder Verkürzen kann auch der Zurrgurthaken 30 entlang des Hüftgürtels 14 verschoben werden. Der Zurrgurthaken 30 lässt sich auf diese Weise individuell an die tragende Person 18 anpassen. Damit verändert sich auch die Trageposition für den Zurrgurthaken 30. An dem Hüftgürtel 14 ist ferner die Hüftgurtpolsterung 75 befestigt. An der Hüftgurtpolsterung 75 befindet sich gut sichtbar die Bandschlaufe 76, durch welche das Band 42 geführt ist.

Anstelle des Clips 43 ist hier eine Sicherungsschlaufe 77 mit einer Öse 79 als Sicherungsverbindung 45 vorgesehen. Die Sicherungsschlaufe 77 ist an der Bandschlaufe 76 befestigt. Die Öse 79 wird an einer hier nicht gezeigten Halterung der Kunststoffhartschale 12 befestigt, wodurch die Ein-Punkt-Befestigung 29 gesichert wird. Die Ein-Punkt-Befestigung 29 bleibt weiterhin die lasttragende Verbindung zwischen dem Hüftgürtel 14 und der Kunststoffhartschale 12. Nur im Falle, dass sich die Ein-Punkt-Befestigung 29 versehentlich löst, d.h. der Zurrgurthaken 30 von der Kunststoffhartschale 12 aushakt, hält die Sicherungsschlaufe 77 für diesen Notfall noch die Verbindung. Hierdurch können Unfälle vermieden werden.

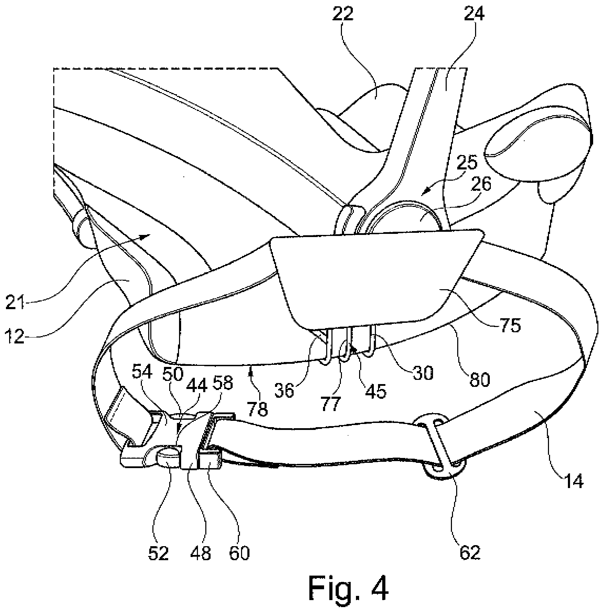

Mit der Fig. 4 wird in einer perspektivischen Darstellung ein Ausschnitt der erfindungsgemäßen Vorrichtung 10 gemäß den vorherigen Figuren gezeigt, bei der der Zurrgurthaken 30 in die Kunststoffhartschale 12 eingehakt ist. Soweit sich die Figuren entsprechen, wird hiermit auf die vorherigen Figuren Bezug genommen. Für identische Bestandteile werden daher ebenfalls auch die gleichen Bezugszeichen verwendet. Der Hüftgürtel 14 ist perspektivisch so dargestellt, dass seine Innenseite sichtbar wird. Die Hüftgurtpolsterung 75 verdeckt den Zurrgurthaken 30 so weit, dass Druckstellen bei dem Tragenden ausbleiben. Der Steckverschluss 44 ist im Gegensatz zu der Fig. 2 in dieser Darstellung des Ausführungsbeispiels zusammengesteckt. Die Rastnasen 52 der Klammern 50 sind in den Ausnehmungen 58 des Aufnahmeelements 54 sichtbar. Durch einfaches Zusammendrücken der Klammern 50 löst sich die Rastung des Steckverschlusses 44, sodass das Klammerelement 48 aus dem Aufnahmeelement 54 herausgezogen werden kann. Mit der Schieberschnalle 62 wird der Hüftgürtel 14 bei Bedarf in seiner Länge verändert. Der Zurrgurthaken 30 hakt in einen Rand 78 der Kunststoffhartschale 12. Der Rand 78 wird im vorliegenden Ausführungsbeispiel aus einer überstehenden Kante 80 gebildet. Der Zurrgurthaken 30 umgreift diese Kante 80. Die Kunststoffhartschale 12 ist mit der Polsterung 22 gefüttert.

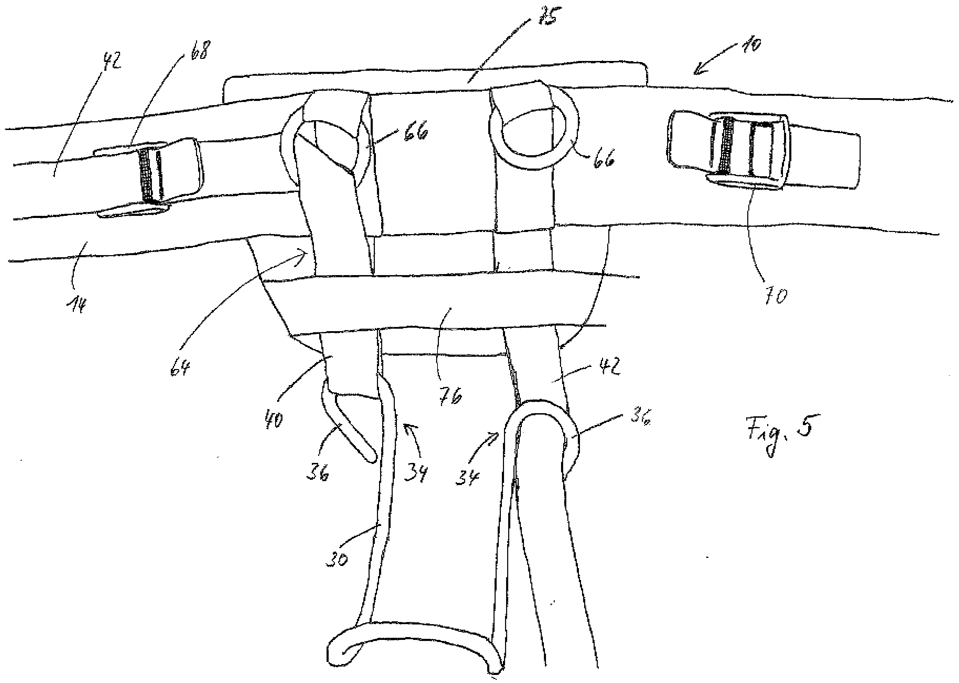

Die Fig. 5 zeigt einen Ausschnitt des Hüftgürtels mit einer Bandkonstruktion 64 für den Zurrgurthaken 30 wie bei der Fig. 3. Soweit sich die Figuren entsprechen, wird hiermit auch auf die vorherigen Figuren Bezug genommen. Für identische Bestandteile werden wiederum die gleichen Bezugszeichen verwendet. Im Gegensatz zu der Fig. 3 ist die Befestigungsschnalle 70 gelöst. Das Band 42 ist aus Befestigungsschnalle 70 und der Umlenköse 66 herausgezogen. Mit dieser Fig. 5 wird somit gezeigt, wie sich die Länge des Bandes 42 verändern lässt. Die Befestigungsschnalle 68 ist geöffnet. Allerdings ist das Band 42 an dieser Seite nicht aus seiner Führung durch die Umlenköse 66 und die Befestigungsschnalle 68 herausgezogen. Durch Verändern der jeweiligen Bandlänge der Bänder 42 lässt sich nicht nur Abstand des Zurrgurthakens 30 zum Hüftgürtel 14 variieren, sondern es lässt sich der Zurrgurthaken 30 auch entlang des Hüftgürtels 14 verschieben.

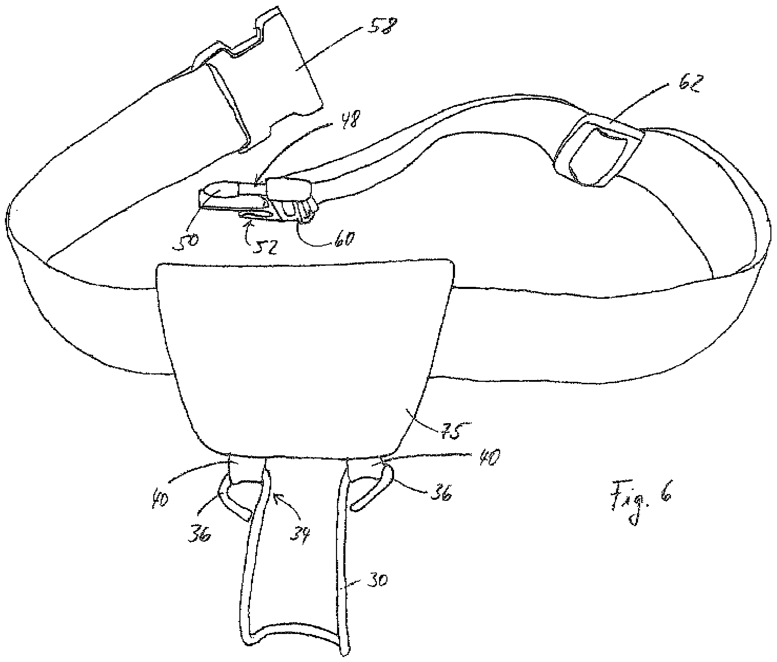

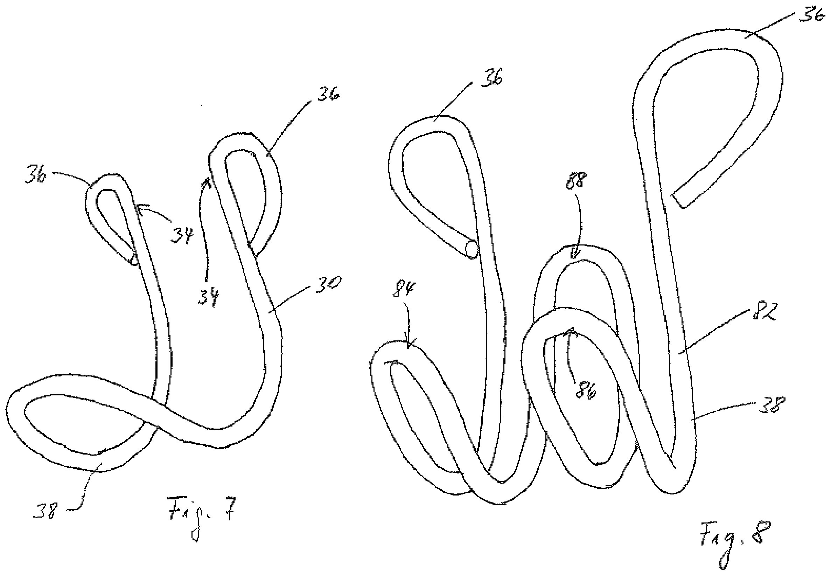

Die Fig. 6 zeigt in einer perspektivischen Darstellung die Innenseite des Hüftgürtels 14 der erfindungsgemäßen Vorrichtung 10 zum Tragen einer Kunststoffhartschale 12 entsprechend den vorherigen Figuren. Soweit sich die Figuren entsprechen, wird hiermit auch auf die vorherigen Figuren Bezug genommen. Für identische Bestandteile werden wiederum die gleichen Bezugszeichen verwendet. Der Hüftgürtel 14 ist in dieser Darstellung geöffnet. Die Hüftgurtpolsterung 75 verhindert, dass Druckstellen beim Träger entstehen. Die Hüftgurtpolsterung 75 verdeckt die Bandkonstruktion 64 im Bereich der Hüfte des Trägers vollständig. Insofern wird auch nicht punktuell von der Bandkonstruktion 64 ein unangenehmer Druck auf die Hüfte des Trägers ausgeübt. So ergibt sich ein relativ angenehmes Tragen. Mit der Fig. 7 wird der Zurrgurthaken 30 für eine erfindungsgemäße Vorrichtung 10 gezeigt. Soweit sich die Figuren entsprechen, wird hiermit auch auf die vorherigen Figuren Bezug genommen. Für identische Bestandteile werden wiederum die gleichen Bezugszeichen verwendet. Der Zurrgurthaken 30 besteht aus dem gebogenen Metalldraht 38, welcher eine U-förmige Gestalt aufweist. An seinen Enden 34 befinden sich die Ösen 36. Die Ösen 36 nehmen die Schlaufen 40 der Bänder 42 auf.

Fig. 8 zeigt einen Zurrgurtdoppelhaken 82 für eine erfindungsgemäße Vorrichtung 10. Soweit sich die Figuren entsprechen, wird hiermit auch auf die vorherigen Figuren Bezug genommen. Für identische Bestandteile werden wiederum die gleichen Bezugszeichen verwendet. Der Zurrgurtdoppelhaken 82 ist ähnlich wie der Zurrgurthaken 30 aufgebaut. Allerdings verfügt er über zwei hakenförmige Bereiche 84, 86. Die hakenförmige Bereiche 84, 86 werden über einen ausgestülpten Verbindungsbereich 88 miteinander verbunden. Auch der Zurrgurtdoppelhaken 82 besteht aus dem gebogenen Metalldraht 38.

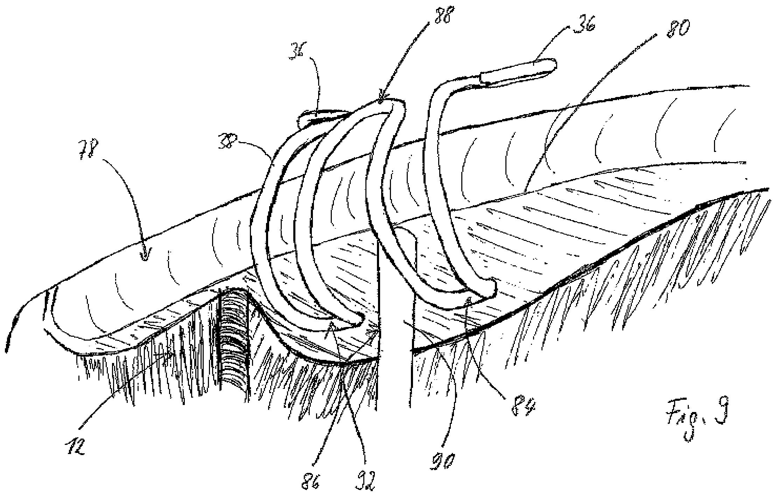

In der Fig. 9 wird einen Ausschnitt des Zurrgurtdoppelhakens 82 für eine erfindungsgemäße Vorrichtung 10 gezeigt, welcher in eine Kunststoffhartschale 12 eingreift. Soweit sich die Figuren entsprechen, wird hiermit auch auf die vorherigen Figuren Bezug genommen. Für identische Bestandteile werden wiederum die gleichen Bezugszeichen verwendet. Die Kunststoffhartschale 12 enthält den Rand 78 mit der Kante 80. Der Zurrgurtdoppelhaken 82 umgreift die Kante 80 des Randes 78. Der ausgestülpte Verbindungsbereich 88 umgibt dabei einen Stift 90 der Kunststoffhartschale 12. Der Stift 90 ist in der Kunststoffhartschale 12 als Haltemittel 92 eingelassen. Dieser Stift 90 verhindert ein seitliches Verrutschen des Zurrgurtdoppelhakens 82 an dem Rand 78.

### Bezugszeichenliste

- 10: Vorrichtung
- 12: Kunststoffhartschale
- 13: Tragegurt
- 14: Hüftgürtel
- 16: Hüfte
- 18: Person
- 20: Babyschale
- 21: Halbschale
- 22: Polsterung
- 24: Tragebügel
- 25: Enden des Tragebügels
- 26: Gelenk
- 28: Befestigungsmittel
- 29: Ein-Punkt-Befestigung
- 30: Zurrgurthaken
- 32: U-förmiger Zurrgurthaken
- 34: Enden des Zurrgurthakens
- 36: Ösen
- 38: Metalldraht
- 40: Schlaufen
- 42: Bänder
- 43: Clip
- 44: Steckverschluss
- 45: Sicherungsverbindung
- 46: Erstes Ende des Hüftgürtels
- 48: Klammerelement
- 50: Klammern
- 52: Rastnasen
- 54: Aufnahmeelement
- 56: Zweites Ende des Hüftgürtels
- 58: Ausnehmungen
- 60: Lasche des Klammerelements
- 62: Schieberschnalle
- 64: Bandkonstruktion
- 66: Umlenkösen
- 67: Ende der Bänder
- 68,70: Befestigungsschnallen
- 72,74: Enden der Bänder
- 75: Hüftgurtpolsterung
- 76: Bandschlaufe
- 77: Sicherungsschlaufe
- 78: Rand der Kunststoffhartschale
- 79: Öse der Sicherungsschlaufe
- 80: Kante
- 82: Zurrgurtdoppelhaken
- 84, 86: Hakenförmige Bereiche
- 88: ausgestülpter Verbindungsbereich
- 90: Stift
- 92: Haltemittel

## Patentansprüche

1. Vorrichtung (10) zum Tragen einer Kunststoffhartschale (12) mit Tragebügel (24), wie eine Babyschale (20) bzw. ein Kindersitz für Kleinkinder, bestehend aus
a) einem Hüftgürtel (14) mit einem Befestigungsmittel (28), wobei der Hüftgürtel (14) im Bereich um die Hüften eines Trägers (18) angelegt wird und wobei die Kunststoffhartschale (12) an dem Befestigungsmittel (28) des Hüftgürtels (14) zum Tragen der Last befestigbar ausgestaltet ist,
b) das Befestigungsmittel (28) als Haken (30, 82) ausgestaltet ist und der Haken (30, 82) in die Kunststoffhartschale (12) für den Transport einhakt, wodurch eine Ein-Punkt-Befestigung (29) zwischen der Kunststoffhartschale (12) und dem Hüftgürtel entsteht, über die alleine die Last der Kunststoffhartschale (12) auf den Hüftgürtel (14) übertragen wird,
**dadurch gekennzeichnet, dass**
c) eine zusätzliche lösbare Sicherungsverbindung (45) zwischen den Befestigungsmitteln (28) und der Kunststoffhartschale (12) vorgesehen ist, welche das selbständige Lösen der Verbindung zwischen dem Haken (30, 82) und der Kunststoffhartschale (12) verhindert.

2. Vorrichtung (10) zum Tragen einer Kunststoffhartschale (12) mit Tragebügel (24) nach Anspruch 1, **dadurch gekennzeichnet, dass** die Sicherungsverbindung als schwenkbarer Clip ausgebildet ist.

3. Vorrichtung (10) zum Tragen einer Kunststoffhartschale (12) mit Tragebügel (24) nach einem der Ansprüche 1 oder 2, **dadurch gekennzeichnet, dass** der Hüftgürtel (14) in seiner Länge einstellbar ausgebildet ist.

4. Vorrichtung (10) zum Tragen einer Kunststoffhartschale (12) mit Tragebügel (24) nach einem der Ansprüche 1 bis 3, **dadurch gekennzeichnet, dass** der Hüftgürtel (14) einen Steckverschluss (44) zum lösbaren Verbinden von Hüftgürtelenden (46,56) aufweist.

5. Vorrichtung (10) zum Tragen einer Kunststoffhartschale (12) mit Tragebügel (24) nach einem der Ansprüche 1 bis 4, **dadurch gekennzeichnet, dass** der Hüftgürtel (14) einen Klett-Verschluss zum lösbaren Verbinden von Hüftgürtelenden und/oder zum Einstellen der Hüftgürteilänge aufweist.

6. Vorrichtung (10) zum Tragen einer Kunststoffhartschale (12) mit Tragebügel (24) nach einem der Ansprüche 1 bis 5, **dadurch gekennzeichnet, dass** der Haken (30, 82) als Zurrgurthaken (30) mit einer U-förmigen Gestalt ausgestaltet ist, wobei dessen beide Enden (34) der U-förmigen Gestalt an dem Hüftgürtel (14) befestigt sind.

7. Vorrichtung (10) zum Tragen einer Kunststoffhartschale (12) mit Tragebügel (24) nach einem der Ansprüche 1 bis 5, **dadurch gekennzeichnet, dass** der Haken (30, 82) als Karabinerhaken ausgebildet ist.

8. Vorrichtung (10) zum Tragen einer Kunststoffhartschale (12) mit Tragebügel (24) nach einem der Ansprüche 1 bis 7, **dadurch gekennzeichnet, dass** der Haken (30, 82) lös- und/oder klappbar an dem Hüftgürtel (14) ausgebildet ist.

9. Vorrichtung (10) zum Tragen einer Kunststoffhartschale (12) mit Tragebügel (24) nach einem der Ansprüche 1 bis 8, **dadurch gekennzeichnet, dass** eine Polsterung (75) für den Hüftgürtel (14) im Bereich des Hakens (30, 82) ausgebildet ist.

10. Vorrichtung (10) zum Tragen einer Kunststoffhartschale (12) mit Tragebügel (24) nach einem der Ansprüche 1 bis 9, **dadurch gekennzeichnet, dass** der Haken (30, 82) an dem Hüftgürtel (14) verschiebbar ausgebildet ist.

## Claims

1. A device (10) for carrying a plastic hard shell (12) with a carrying handle (24) such as a baby seat (20) or a child seat for toddlers, consisting of
a) a hip belt (14) with a fastening means (28), whereby the hip belt (14) is worn in the area of the hips of a wearer (18) and whereby the plastic hard shell (12) is designed to be fastened to the fastening means (28) of the hip belt (14) to carry the load,
b) the fastening means (28) is designed as a hook (30, 82) and the hook (30, 82) hooks into the plastic hard shell (12) for transport, as a result of which a one-point connection (29) is created between the plastic hard shell (12) and the hip belt, through which only the load of the plastic hard shell (12) is transferred to the hip belt (14),
**characterized in that**
c) an additional releasable safety connection (45) between the fastening means (28) and the plastic hard shell (12) is provided, which prevents the self-releasing of the connection between the hook (30, 82) and the plastic hard shell (12).

2. Device (10) for carrying a plastic hard shell (12) with a carrying handle (24) according to Claim 1, **characterized in that the** safety connection is designed as a swivel clip.

3. Device (10) for carrying a plastic hard shell (12) with a carrying handle (24) according to one of Claims 1 or 2, **characterized in that** the hip belt (14) is designed so that its length is adjustable.

4. Device (10) for carrying a plastic hard shell (12) with a carrying handle (24) according to one of Claims 1 to 3, **characterized in that** the hip belt (14) has a male fastener (44) for releasably connecting the ends of the hip belt (46, 56).

5. Device (10) for carrying a plastic hard shell (12) with a carrying handle (24) according to one of Claims 1 to 4, **characterized in that** the hip belt (14) has a hook-and-loop fastener for releasably connecting the ende of the hip belt and/or adjusting the length of the hip belt.

6. Device (10) for carrying a plastic hard shell (12) with a carrying handle (24) according to one of Claims 1 to 5, **characterized in that** the hook (30, 82) is designed as a U-shaped lashing strap hook (30), whereby the two ends (34) of the U-shaped lashing strap hook (30) are fastened to the hip belt (14).

7. Device (10) for carrying a plastic hard shell (12) with a carrying handle (24) according to one of Claims 1 to 5, **characterized in that** the hook (30, 82) is designed as a carabiner hook.

8. Device (10) for carrying a plastic hard shell (12) with a carrying handle (24) according to one of Claims 1 to 7, **characterized in that** the hook (30, 82) is designed to be released from and/or foldable on the hip belt (14).

9. Device (10) for carrying a plastic hard shell (12) with a carrying handle (24) according to one of Claims 1 to 8, **characterized in that** padding (75) for the hip belt (14) is provided in the area of the hook (30, 82).

10. Device (10) for carrying a plastic hard shell (12) with a carrying handle (24) according to one of Claims 1 to 9, **characterized in that** the hook (30, 82) is designed to slide on the hip belt (14).

## Revendications

1. Dispositif (10) destiné à porter une coque en matière plastique (12) munie d'un arceau (24), comme une coque pour bébés (20) ou un siège-enfant pour enfants en bas âge, se composant de
(a) une ceinture pour les hanches (14) munie d'un moyen de fixation (28), la ceinture pour les hanches (14) étant posée autour des hanches d'un porteur (18) et la coque en matière plastique (12) étant configurée de sorte à pouvoir être fixée sur le moyen de fixation (28) de la ceinture pour les hanches (14) afin de porter la charge,
(b) le moyen de fixation (28) est configuré sous forme de crochet (30, 82) et le crochet (30, 82) s'accroche dans la coque en matière plastique (12) à des fins de transport, générant ainsi une fixation en un point (29) entre la coque en matière plastique (12) et la ceinture pour les hanches qui permet de transmettre uniquement la charge de la coque en matière plastique (12) à la ceinture pour les hanches (14), **caractérisé en ce que**
(c) il est prévu un lien de sécurité supplémentaire (45) pouvant être détaché, situé entre les moyens de fixation (28) et la coque en matière plastique (12) et empêchant le lien entre le crochet (30, 82) et la coque en matière plastique (12) de se détacher de lui-même.

2. Dispositif (10) destiné à porter une coque en matière plastique (12) munie d'un arceau (24) selon la revendication 1, **caractérisé en ce que** le lien de sécurité est configuré sous forme de clips pouvant pivoter.

3. Dispositif (10) destiné à porter une coque en matière plastique (12) munie d'un arceau (24) selon l'une quelconque des revendications 1 ou 2, **caractérisé en ce que** la ceinture pour les hanches (14) est configurée de sorte à pouvoir se régler en longueur.

4. Dispositif (10) destiné à porter une coque en matière plastique (12) munie d'un arceau (24) selon l'une quelconque des revendications 1 à 3, **caractérisé en ce que** la ceinture pour les hanches (14) présente une fermeture enfichable (44) destinée à relier des extrémités de la ceinture pour les hanches (46, 56) de sorte à pouvoir les détacher.

5. Dispositif (10) destiné à porter une coque en matière plastique (12) munie d'un arceau (24) selon l'une quelconque des revendications 1 à 4, **caractérisé en ce que** la ceinture pour les hanches (14) présente une fermeture auto-agrippante destinée à relier des extrémités de la ceinture pour les hanches de sorte à pouvoir les détacher et/ou destinée à régler la longueur de la ceinture pour les hanches.

6. Dispositif (10) destiné à porter une coque en matière plastique (12) munie d'un arceau (24) selon l'une quelconque des revendications 1 à 5, **caractérisé en ce que** le crochet (30, 82) est configuré sous forme de crochet pour sangles (30) en forme de U, les deux extrémités (34) de la forme en U étant fixées à la ceinture pour les hanches (14).

7. Dispositif (10) destiné à porter une coque en matière plastique (12) munie d'un arceau (24) selon l'une quelconque des revendications 1 à 5, **caractérisé en ce que** le crochet (30, 82) est configuré sous forme de mousqueton.

8. Dispositif (10) destiné à porter une coque en matière plastique (12) munie d'un arceau (24) selon l'une quelconque des revendications 1 à 7, **caractérisé en ce que** le crochet (30, 82) est configuré de sorte à pouvoir se détacher de la ceinture pour les hanches (14) et/ou à pouvoir se rabattre sur celle-ci.

9. Dispositif (10) destiné à porter une coque en matière plastique (12) munie d'un arceau (24) selon l'une quelconque des revendications 1 à 8, **caractérisé en ce qu'**un rembourrage (75) pour la ceinture pour les hanches (14) est configuré dans la zone du crochet (30, 82).

10. Dispositif (10) destiné à porter une coque en matière plastique (12) munie d'un arceau (24) selon l'une quelconque des revendications 1 à 9, **caractérisé en ce que** le crochet (30, 82) est configuré se sorte à pouvoir se déplacer sur la ceinture pour les hanches (14).
